# EUROPÄISCHE PATENTSCHRIFT

(11) **EP 2 276 822 B1**
(45) Veröffentlichungstag und Bekanntmachung des Hinweises auf die Patenterteilung: **28.12.2011**
(21) Anmeldenummer: 09749793.7
(22) Anmeldetag: 18.05.2009
(51) Int. Cl.: C09K 9/02, G02F 1/15

(54) **ELEKTROCHROME FORMULIERUNG MIT ZUMINDEST ZWEI FARBSYSTEMEN, VERFAHREN ZUR HERSTELLUNG DAZU UND ELEKTROCHROMES BAUTEIL**
ELECTROCHROMIC FORMULATION WITH AT LEAST TWO DYE SYSTEMS METHOD FOR PRODUCTION THEREOF AND ELECTROCHROMIC COMPONENT
FORMULATION ÉLECTROCHROME COMPORTANT AU MOINS DEUX SYSTÈMES DE COULEUR, PROCÉDÉ DE FABRICATION ASSOCIÉ ET COMPOSANT ÉLECTROCHROME

(30) Priorität: 19.05.2008 DE 102008024187
(43) Veröffentlichungstag der Anmeldung: 26.01.2011
(73) Patentinhaber: Siemens Aktiengesellschaft, 80333 München (DE)
(72) Erfinder: KANITZ, Andreas, 91315 Höchstadt (DE); MALEIKA, Marek, 90766 Fürth (DE); RIEGER, Gotthard, 91058 Erlangen (DE); ROTH, Wolfgang, 91080 Uttenreuth (DE)
(74) Vertreter: Wolff, Harry
(86) Internationale Anmeldenummer: PCT/EP2009/055995
(87) Internationale Veröffentlichungsnummer: WO 2009/141303

(56) Entgegenhaltungen:
- WO-A1-2008/037643
- US-A- 6 141 137

## Beschreibung

Die Erfindung betrifft elektrochrom aktive Formulierungen für blinkende elektrochrome Displays, insbesondere für solche, die zusätzlich zum Blinken noch eine dauerhafte Symbolik zu der blinkenden Anzeige schalten können. Die Formulierungen sind dadurch gekennzeichnet, dass das erste Farbsystem bei einer niedrigen Spannung reversibel schaltbar, also zur blinkenden Darstellung von Symbolen, geeignet ist. Das zweite Farbsystem ist bei einer höheren Spannung aktivierbar und ist auf Grund seiner Bistabilität oder Irreversibilität für die dauerhafte Anzeige von Symbolen geeignet.

Elektrochrome Displays auf Basis organischer Materialien umfassen im Normalfall eine aktive elektrochrome Schicht, die sich im Falle eines Displays zwischen senkrecht zueinander angeordneten Elektroden befindet. Wesentliche Bestandteile der aktiven Schicht sind ein Redox-System und ein Farbstoff. Durch das Anlegen einer Spannung wird das Konzentrationsverhältnis der Redox-Partner zueinander im Material verschoben. Bei dieser Reaktion werden im Material Protonen und/oder Ionen freigesetzt bzw. gebunden. Wenn eine Spannung an das Material angelegt wird, dann läuft die Verschiebung des Gleichgewichts vorhandener Redox-Partner an den beiden Elektroden in entgegen gesetzter Richtung. Dies kann beispielsweise über einen pH-aktiven Farbstoff sichtbar gemacht werden.

Ein Prinzip elektrochrome Displays zu verwirklichen besteht darin, die Farbänderung nicht durch die Änderung des pH-Wertes im Display herbeizuführen, sondern die ohnehin stattfindenden Redoxprozesse zu nutzen, um kontrastreiche Farbwechsel durch die Bildung reduktiver und/oder oxidativer Zustände in geeigneten Materialien zu erzeugen. Dabei sind vor allem die sogenannten Viologene und Polythiophene als Materialklassen bekannt geworden.

US 6 141 137 A offenbart eine elektrochrome Formulierung, bestehend aus drei unterschiedlichen elektrochromen Verbindungen, mindestens eine davon ist eine Bipyridinverbindung. Die elektrochromen Verbindungen sind unabhängig voneinander schaltbar.

Spezielle Anzeigeelemente erfordern die Darstellung sowohl blinkender Symbole als auch dauerhaft angezeigter Symbole. Dazu müssen Formulierungen mit den jeweils entsprechenden Stabilitäten des Farbumschlags in geschaltetem und stromlosem Zustand verwendet werden. Diese werden, beispielsweise mittels eines geeigneten Applikations-Verfahrens, wie dem Siebdruck, auf entsprechende, lokal von einander getrennte Stellen eines Anzeigeelements aufgebracht. Diese Vorgehensweise ist jedoch technisch aufwendig.

Aufgabe der Erfindung ist es daher, eine Formulierung für ein elektrochromes elektronisches und organisch basiertes Bauteil zu schaffen, durch die verschieden stabile Farbumschläge im stromlosen Zustand erzeugt werden können.

Gegenstand der Erfindung ist eine elektrochrome Formulierung für ein organisches elektronisches Bauteil, bei dem zumindest zwei chemisch verschiedene Farbsysteme enthalten sind, wovon das erste bei einer niedrigen Spannung reversibel schaltbar ist und das zweite bei einer höheren Spannung aktivierbar ist. Außerdem ist Gegenstand der Erfindung ein Verfahren zur Herstellung einer elektrochromen Formulierung, folgende Verfahrensschritte umfassend: Ein reversibel bei niedriger Spannung schaltbares elektrochromes Farbsystem wird mit einem bistabilen oder irreversibel schaltbaren Farbsystem vermischt, danach wird dem Gemisch Lösemittel zugesetzt, so dass die elektrochrome Formulierung in Form einer auf Elektrodenschichten applizierbaren Paste entsteht. Schließlich ist noch Gegenstand der Erfindung ein elektrochromes elektronisches Bauteil auf organischer Basis mit zumindest einer aktiven elektrochromen organischen Schicht zwischen zwei Elektroden, wobei in der zumindest einen elektrochrom aktiven organischen Schicht zumindest zwei, bei verschiedenen Spannungen und/oder Stromimpulslängen schaltbare elektrochrome Farbsysteme enthalten sind.

Unter "reversibel schaltbar" wird vorliegend verstanden, dass das Farbsystem eine kurze Stabilität des Farbumschlags im stromlosen Zustand hat und damit geeignet ist zur blinkenden Darstellung von Symbolen in der Anzeigevorrichtung.

Unter "bistabil" und/oder "irreversibel" schaltbar wird vorliegend verstanden, dass das Farbsystem eine lange Stabilität des Farbumschlags im stromlosen Zustand hat und damit für die dauerhafte Anzeige von Symbolen geeignet ist. Die Unterscheidung zwischen bistabil und irreversibel ergibt sich dadurch, dass ein bistabiles Farbsystem durch Umpolung wieder seine ursprüngliche Farbe zurückgewinnt, während das irreversibel geschaltete Farbsystem nicht wieder in den Ausgangszustand zurückversetzt werden kann.

Die Formulierungen sind dadurch gekennzeichnet, dass das erste Farbsystem bei einer niedrigen Spannung reversibel schaltbar, also zur blinkenden Darstellung von Symbolen, geeignet ist. Das zweite Farbsystem ist bei einer höheren Spannung aktivierbar und ist auf Grund seiner Bistabilität oder Irreversibilität für die dauerhafte Anzeige von Symbolen geeignet.

Als Farbsystem wird dabei immer eine, auch in Alleinstellung für ein organisches elektronisches elektrochromes Bauteil schaltbare, Farbgebende Komponente verstanden. Diese Komponente kann dabei unter Umständen zwei oder mehr chemische Einzelverbindungen enthalten, beispielsweise eine 4,4' Bipyridiniumsalz und ein Ferrocen oder eine, in einem Redoxgleichgewicht dimerisierende, Schwefelverbindung und ein Metallsalz.

Erfindungsgemäß wird eine Mischung zumindest zweier, elektrochrom aktiver Farbsysteme in einer Formulierung erzeugt, wobei die einzelnen Farbsysteme in ihrem Schaltverhalten weitgehend unabhängig voneinander sind.

Beispielsweise wird ein erstes elektrochrom aktives Farbsystem mit den folgenden Eigenschaften eingesetzt: ein Redox-System, das infolge Elektronen-Aufnahme oder -Abgabe die Farbe ändert. Dieses Farbsystem ist bei niedriger Spannung (bis 1,5V) reversibel schaltbar. Im Grundzustand ist das System z. B. farblos, im geschalteten Zustand z. B. blau. Im stromlosen Zustand fällt das System in den farblosen Zustand zurück, es kann aber auch aktiv zurückgeschaltet werden. Durch alternierende Umpolung können also blinkende Symbole dargestellt werden. Somit gewährleistet das erste elektrochrom aktive Farbsystem sein Blinken beispielsweise durch ein elektrochrom schaltendes Redoxpaar.

Dazu wird beispielsweise ein zweites elektrochrom aktives System mit den folgenden Eigenschaften dazugemischt:
Das zweite Farbsystem ist im Gegensatz zum ersten Farbsystem erst bei höherer Spannung 2,5 - 3 V aktivierbar. Bei niedriger Spannung bleibt es komplett unverändert und weitgehend inaktiv in der Formulierung.

Nach einer vorteilhaften Ausgestaltung der Erfindung reagiert das zweite Farbsystem dabei bei einem kürzeren Spannungspuls (5 -10s) bistabil in dem Sinne, dass es stromlos erst nach einem längeren Zeitraum (z. B. 1 Stunde bis mehrere, ca. 10 Stunden) in den, beispielsweise, farblosen Ausgangszustand zurückfällt und unter Einwirkung eines längeren Spannungspulses irreversibel geschaltet wird, also dann gar nicht mehr in den Ausgangszustand zurückfällt, aber auch nicht durch Umpolung wieder in den Ausgangszustand zurückversetzt werden kann.

Nach dem Zurückschalten (Umpolen) des zweiten Systems - bei bistabiler Schaltung - in seinen farblosen Grundzustand, ist die Formulierung wieder in ihrem Ausgangszustand und dann kann beispielsweise das erste Farbsystem wieder für die Darstellung blinkender Symbole verwendet werden.

Unter der Einwirkung eines längeren Spannungspulses (20- 30 s) reagiert das zweite System irreversibel im Sinne einer chemisch irreversibel verlaufenden Reaktion, es ist die dauerhafte Anzeige eines Symbols möglich. Danach ist eine Rückschaltung des zweiten Systems nicht mehr möglich.

Beispielsweise kann als zweites, bei höherer Spannung schaltbares elektrochrom aktives Farbsystem eingesetzt werden, das ein bistabiles Verhalten durch eine, in einem Redoxgleichgewicht dimerisierende, Schwefel-Verbindung in Gegenwart zumindest eines Metallsalzes zeigt.

Solange das bei niedriger Spannung aktivierbare Farbsystem betrieben wird, bleibt das bei höherer Spannung aktivierbare inaktiv. Bei höherer Spannung sind beispielsweise beide Farbsysteme aktiviert, wobei sich die Farbeindrücke der einzelnen Farbsysteme in der Regel überlagern. Ist der vom ersten Farbsystem erzeugte Farbeindruck z. B. blau und der vom zweiten Farbsystem erzeugte Farbeindruck z. B. schwarz, so entsteht bei höherer Spannung insgesamt ein schwarzer Farbeindruck. Im stromlosen zurückgeschalteten Zustand sind beide Farbsysteme beispielsweise farblos.

Denkbar sind auch erste Farbsysteme, die nur bei längerem Stromimpuls reversibel schaltbar sind und deshalb bei einem kurzen Stromimpuls, auch wenn dieser bei höherer Spannung erfolgt, nicht geschaltet werden, so dass eine Farbgebung des Anzeigeelements, die allein durch den Farbumschlag des bei höherer Spannung schaltbaren Farbsystems bewirkt wird, erzeugbar ist.

Überraschender Weise können beide Systeme in ein und derselben Formulierung (als Mischung) nebeneinander vorliegen, ohne sich gegenseitig zu beeinflussen. Das gilt für das Verhalten im elektrischen Feld und für die Lagerstabilität der Formulierung.

Beispiele für das erste Farbsystem sind Redox-Chromophore, z. B. solche auf der Basis von Bipyridiniumsalzen, wie die polymeren 4,4'-Bipyridinium-Strukturen, die durch einen Alkylenspacer voneinander getrennt sind, wobei der Alkylenspacer 3 bis 25 Kohlenstoffatome umfasst, wie sie, zumindest teilweise, aus der PCT/EP2006/064048 bekannt sind. In dem Farbsystem ist beispielsweise eine Komponente mit folgender Grundstruktur: 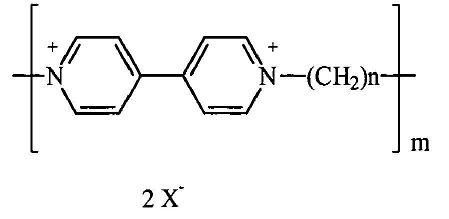
n = 10 - 20;
m = 10 - 200;
X = beliebiges Anion, bevorzugt Halogenid und/oder Trifluormethyl-sulfonat.

Beispiele für das zweite Farbsystem sind z. B. solche, die unter Ablauf einer irreversiblen chemischen Reaktion geschaltet werden, wie sie beispielsweise aus der PCT/EP2007/052984 bekannt sind, bistabile Systeme, in denen zumindest eine Zwitterionische Struktur, wie aus der PCT/EP2007/059931, bekannt, enthalten sind oder Farbsysteme, die neben einem Metallsalz oder Metallsalzgemisch noch eine redox-aktive Multischwefelverbindung, wie sie aus der parallelen Anmeldung der gleichen Erfinder bekannt sind, enthalten.

Diese Komponente, die zumindest eine in einem Redoxgleichgewicht dimerisierende Schwefelverbindung und ein Metallsalz oder Metallsalzgemisch enthält, stabilisiert den "irreversiblen" Zustand für zumindest mehrere Stunden.

Geeignete Metallsalze sind solche aus den Nebengruppen 1, 2, 6, 7, 8 sowie den Hauptgruppen 5 und 6. Besonders geeignet sind Nickel- und Kobaltsalze, insbesondere Nickel(II)-bromid und Kobalt(II)-acetat.

Das Verhältnis der beiden Farbstoffsysteme kann variabel gestaltet werden. Vorteilhaft ist ein äquimolares Verhältnis eines bei niedriger Spannung schaltenden Farbsystems wie beispielsweise dem 4,4'Bipyridiniumsalzes mit einem Ferrocen oder Ferrocenderivat, eines entsprechenden Metallsalzes und/oder Metallsalzgemisches und einer entsprechenden in einem Redoxgleichgewicht dimerisierbaren Schwefelverbindung.

Eine vorteilhaften Ausgestaltung des organischen elektronischen elektrochromen Bauteils ist die Ausführung der Elektroden. Zumindest eine der beiden Elektroden, beispielsweise eine transparente ITO-Elektrode des elektrochromen organischen elektronischen Bauteils ist strukturiert. Zusätzlich können einzelne Bereiche, die z. B. verschiedenen Symbolen entsprechen, mit unterschiedlicher Spannung angesteuert werden. So können Bereiche mit niedriger Spannungsversorgung langen oder kurzen Pulsen definiert werden, in denen nur das erste Farbsystem aktiviert wird. In den Bereichen mit höherer Spannungsversorgung können beide Farbsysteme aktiviert werden.

### Ausführungsbeispiele

### 1 Herstellung der Formulierung

3g Titandioxid werden mit 0.3g Poly- N,N'(dodecylen)- bipyridiniumdibromid und 0,12g Ferrocen (Farbstoffsystem 1) sowie 0.3g Nickel(II)-bromid und 0.28g 4,5-Di-S-methyl-1,3-dithiol-2-on (Farbstoffsystem 2) mittels eines Speedmixers bei 2000U/Min. für 5 Minuten intensiv vermischt. Anschließend wird das erhaltene Pulver mittels eines Speedmixers bei 2000U/Min. für 5 Minuten in 2g Diethylenglykol dispergiert. Es wird eine helle, streichfähige Paste erhalten.

### 2 Herstellung und Beschaltung einer elektrochrom aktiven Zelle

Die Formulierung wird mittels Siebdruck zwischen zwei ITObeschichtete Folien appliziert, wobei ein Kleberahmen die bedruckte Fläche begrenzt. Mittels des Kleberahmens werden die beiden Folien auch miteinander verbunden. Die Dicke der gedruckten Schicht beträgt 30 m. Das auf diese Weise hergestellte elektrochrome Anzeigeelement hat einen weißen Farbeindruck.

### 3 Elektrische Beschaltung der elektrochrom aktiven Zelle

Die Beschaltung der Zelle erfolgt durch Anlegen einer Spannung mit alternierendem Vorzeichen. Dabei sind die folgenden Beschaltungsweisen möglich:
a Bei einer Spannung von -1.5V wird an der Kathode ein blauer Farbeindruck erzeugt. Nach Umpolung entsteht wieder der weiße Farbeindruck des Ausgangszustands. Der Farbwechsel kann beliebig oft herbeigeführt werden.
b Bei einer Spannung von -3V entsteht an der Kathode ein schwarzer Farbeindruck, der nach 15 Sekunden Beschaltung auch im stromlosen Zustand über Stunden bestehen bleibt. Durch Umpolung kann der weiße Ausgangszustand wieder hergestellt werden. Nach erneuter Beschaltung mit +/-1.5V kann das reversilble Farbsystem 1 wieder aktiviert werden und beliebig oft zwischen seinen Farbzuständen hin- und her geschaltet werden. c Beschaltung mit -3V. Es wird ein schwarzer Farbeindruck erzeugt. Dieser Farbeindruck ist nach einer Beschaltungsdauer von 25 Sekunden dauerhaft und kehrt auch nach Umpolung nicht mehr in den Ausgangszustand zurück.

Die Erfindung betrifft elektrochrom aktive Formulierungen für blinkende elektrochrome Displays, insbesondere für solche, die zusätzlich zum Blinken noch eine dauerhafte Symbolik zu der blinkenden Anzeige schalten können. Die Formulierungen enthalten zumindest zwei chemisch verschiedene Farbsysteme. Die Formulierungen sind dadurch gekennzeichnet, dass das erste Farbsystem bei einer niedrigen Spannung reversibel schaltbar, also zur blinkenden Darstellung von Symbolen, geeignet ist. Das zweite Farbsystem ist bei einer höheren Spannung aktivierbar und ist auf Grund seiner Bistabilität bzw. Irreversibilität für die dauerhafte Anzeige von Symbolen geeignet.

## Patentansprüche

1. Elektrochrome Formulierung für ein organisches elektronisches Bauteil, bei dem zumindest zwei chemisch verschiedene Farbsysteme enthalten sind, wovon das erste Farbsystem bei einer niedrigen Spannung reversibel schaltbar ist und das zweite Farbsystem bei einer höheren Spannung aktivierbar und bistabil und/oder irreversibel schaltbar ist, wobei jedes Farbsystem jeweils zumindest eine farbgebende Komponente umfasst und diese Komponenten dabei je zwei oder mehr chemische Einzelverbindungen enthalten.

2. Formulierung nach Anspruch 1, bei dem das erste, bei niedrigerer Spannung schaltbare Farbsystem bei einer Spannung von etwa 1,5V reversibel schaltbar ist.

3. Formulierung nach Anspruch 1 oder 2, bei dem das zweite, bei höherer Spannung schaltbare Farbsystem bei einer Spannung von etwa 2 bis 3V bistabil und/oder irreversibel schaltbar ist.

4. Formulierung nach einem der vorstehenden Ansprüche, bei dem das erste schaltbare Farbsystem ein 4,4'Bipyridiniumsalz umfasst.

5. Formulierung nach einem der vorstehenden Ansprüche, bei dem das zweite schaltbare Farbsystem eine, in einem Redox-system dimerisierende Schwefelverbindung, umfasst.

6. Verfahren zur Herstellung einer elektrochromen Formulierung, folgende Verfahrensschritte umfassend ein reversibel bei niedriger Spannung schaltbares elektrochromes Farbsystem wird mit einem bistabilen oder irreversibel schaltbaren Farbsystem vermischt, danach wird dem Gemisch Lösemittel zugesetzt, so dass die elektrochrome Formulierung in Form einer auf Elektrodenschichten applizierbaren Paste entsteht, wobei als Farbsysteme jeweils zumindest eine farbgebende Komponente verwendet werden und diese Komponenten dabei je zwei oder mehr chemische Einzelverbindungen enthalten.

7. Elektrochromes elektronisches Bauteil auf organischer Basis mit zumindest einer aktiven elektrochromen organischen Schicht zwischen zwei Elektroden, wobei in der zumindest einen elektrochrom aktiven organischen Schicht zumindest zwei, bei verschiedenen Spannungen und/oder Stromimpulslängen schaltbare elektrochrome Farbsysteme enthalten sind, wobei jedes Farbsystem jeweils zumindest eine farbgebende Komponente umfasst und diese Komponenten dabei je zwei oder mehr chemische Einzelverbindungen enthalten.

8. Bauteil nach Anspruch 7, bei dem zumindest eine der Elektroden strukturiert ist.

9. Bauteil nach einem der vorstehenden Ansprüche 7 oder 8, bei der einzelne Bereiche mit unterschiedlicher Spannung angesteuert werden.

## Claims

1. Electrochromic formulation for an organic electronic component, in which at least two chemically different color systems are present, the first color system being reversibly switchable at a low voltage and the second color system being activatable at a higher voltage, and being bistably and/or irreversibly switchable, wherein each color system comprises at least one coloring component and these components each contain two or more individual chemical compounds.

2. Formulation as claimed in Claim 1, in which the first color system which is switchable at relatively low voltage is reversibly switchable at a voltage of about 1.5 V.

3. Formulation as claimed in Claim 1 or 2, in which the second color system which is switchable at relatively high Voltage is bistably and/or irreversibly switchable at a voltage of about 2 to 3V.

4. Formulation as claimed in any of the preceding claims, in which the first switchable color system comprises a 4,4'-bipyridinium salt.

5. Formulation as claimed in any of the preceding claims, in which the second switchable color system comprises a sulfur compound which dimerizes in a redox system.

6. Process for producing an electrochromic formulation, comprising the hollowing process steps: mixing an electrochromic color system which is reversibly switchable at low voltage with a bistably or irreversibly switchable color system, then adding solvents to the mixture such that the electrochromic formulation is in the form of a paste applicable to electrode layers, wherein the color system used in each case comprises at least one coloring component and these components each contain two or more individual chemical compounds.

7. Electrochromic organic electronic component having at least one active electrochromic organic layer between two electrodes, wherein at least two electrochromic color systems switchable at different voltages and/or power pulse lengths are present in the at least one electrochromically active organic layer, wherein each color system comprises at least one coloring component and these components each contain two or more individual chemical compounds.

8. Component as claimed in Claim 7, in which at least one of the electrodes is structured.

9. Component as claimed in either of the above Claims 7 and 8, in which individual regions are addressed with different voltages.

## Revendications

1. Formulation électrochrome pour un composant électronique organique, dans laquelle au moins deux systèmes colorés différents chimiquement sont contenus, dont le premier système coloré peut être commuté de manière réversible à une tension basse et le deuxième système coloré peut être activé à une tension plus haute et peut être commuté d'une manière bistable et/ou irréversible, dans laquelle chaque système coloré comprend respectivement au moins un composant donnant une couleur et ces composants contiennent respectivement deux ou plusieurs composés chimiques individuels.

2. Formulation suivant la revendication 1, dans laquelle le premier système coloré pouvant être commuté à une tension plus basse peut être commuté d'une manière réversible à une tension d'environ 1,5 V.

3. Formulation suivant la revendication 1 ou 2, dans laquelle le deuxième système coloré commutable à une tension plus haute peut être commuté de manière bistable et/ou irréversible à une tension d'environ 2 à 3 V.

4. Formulation suivant l'une des revendications précédentes, dans laquelle le premier système coloré commutable comprend un sel de 4,4' bipyridinium.

5. Formulation suivant l'une des revendications précédentes, dans laquelle le deuxième système coloré commutable comprend un composé du soufre se dimérisant dans un système redox.

6. Procédé de préparation d'une formulation électrochrome ayant les stades de procédé suivants, dans lesquels un système coloré électrochrome pouvant être commuté de manière réversible à une tension basse est mélangé à un système coloré pouvant être commuté de manière bistable ou irréversible, puis du solvant est ajouté au mélange, de manière à créer la formulation électrochrome sous la forme d'une pâte applicable sur des couches d'électrodes, respectivement au moins un constituant donnant la couleur étant utilisé comme système coloré et ces constituants contenant respectivement deux ou plusieurs composés chimiques individuels.

7. Composant électronique électrochrome à base organique, comprenant au moins une couche organique électrochrome active entre deux électrodes, dans lequel au moins deux systèmes colorés électrochromes pouvant commuter à des tensions différentes et/ou à des longueurs d'impulsions de courant différentes sont contenus dans la au moins une couche organique active électrochrome, chaque système coloré comprenant respectivement au moins un constituant donnant la couleur et ces constituants contenant respectivement deux ou plusieurs composés chimiques individuels.

8. Composant suivant la revendication 7, dans lequel au moins l'une des électrodes est structurée.

9. Composant suivant l'une des revendications précédentes 7 ou 8, dans lequel des zones individuelles sont commandées par une tension différente.
